# EUROPÄISCHE PATENTSCHRIFT

(11) **EP 0 919 759 B1**
(45) Veröffentlichungstag und Bekanntmachung des Hinweises auf die Patenterteilung: **11.02.2004**
(21) Anmeldenummer: 99102502.4
(22) Anmeldetag: 18.10.1995
(51) Int. Cl.: F16L 33/02

(54) **Schlauchklemme**
Hose clip
Collier de serrage

(30) Priorität: 23.11.1994 DE 4443439
(43) Veröffentlichungstag der Anmeldung: 02.06.1999
(62) Teilanmeldung aus: 95116381.5
(73) Patentinhaber: Firma Muhr und Bender, D-57439 Attendorn (DE)
(72) Erfinder: Möller, Rudolf, 57439 Attendorn (DE)
(74) Vertreter: Gesthuysen, von Rohr & Eggert

(56) Entgegenhaltungen:
- DE-C- 3 633 486
- DE-C- 3 832 875
- US-A- 5 203 809

## Beschreibung

Die Erfindung betrifft eine Schlauchklemme mit einem ein Schlauchende im wesentlichen ringförmig umfassenden Klemmkörper mit einander überlappenden Endbereichen, wobei im geklemmten Zustand ein bestimmter erster Durchmesser vorliegt - Klemmzustand - und der Klemmkörper entgegen der eigenen Federkraft mit Hilfe eines Spannwerkzeugs auf einen zweiten größeren Durchmesser aufspreizbar ist - Aufspreizzustand -, im ersten Endbereich ein gegenüber seinem vorderen äußeren Rand zurückversetzter Rastvorsprung vorgesehen ist, der zur Erzielung des Aufspreizzustandes mit dem anderen, zweiten Endbereich in Eingriff bringbar ist, endseitig am ersten Endbereich ein nach außen gerichtetes erstes Spannende vorgesehen ist, der Rastvorsprung des ersten Endbereichs im Aufspreizzustand am vorderen freien oder äußeren Rand des zweiten Endbereichs anliegt und zwischen den Endbereichen eine mechanische Überdehnungsschutzeinriehtung wirksam ist, die ein Aufspreizen der Schlauchklemme wesentlich über den Aufspreizzustand hinaus verhindert, wobei die Überdehnungsschutzeinrichtung einen als Anschlag dienenden Arm aufweist.

Eine Schlauchklemme der eingangs genannten Art, die üblicherweise auch als Federbandschelle bezeichnet wird, ist bereits aus der DE - C - 30 41 106 bekannt. Bei dieser bekannten Schlauchklemme ist am zweiten Endbereich ein annähernd radial verlaufender Abschnitt vorgesehen, an den sich ein etwa im rechten Winkel dazu verlaufender Abdeckabschnitt anschließt, der im Aufspreizzustand das vordere Ende des ersten Endbereichs überdeckt. Der Aufspreizzustand wird dadurch realisiert, daß der freie Rand des ersten Endbereichs hinter den etwa radial verlaufenden Abschnitt einrastet. Bei einer Ausführungsform ist im ersten Endbereich eine aus dem Material des Klemmkörpers im Abstand vom vorderen freien Rand herausgedrückte Sicke vorgesehen, die sich in Aufspreizstellung mit ihrer vorderen scharfen Kante an den radialen Abschnitt anlegt (vgl. Fig. 5 der DE - C - 30 41 106).

Die bekannte Schlauchklemme hat den Vorteil, daß sie lediglich aus einem einzigen Stück besteht und aufgrund ihrer Ausbildung recht kleinbauend ist. Nachteilig ist, daß sich bei verschiedenen Ausführungsformen der Aufspreizzustand nur relativ schwierig verwirklichen läßt, da der vordere freie Rand selbst als Anschlag am radialen Abschnitt dient und von daher nicht zum Angriff bzw. zum Ansetzen des Spannwerkzeugs verwendet werden kann. Bei der erwähnten, die herausgedrückte Sicke aufweisenden Ausführungsform ist zwar ein Angriff des Spannwerkzeuges am vorderen freien Rand möglich, da die Sicke gegenüber dem vorderen freien Rand zurückversetzt ist, jedoch liegt im Klemmzustand die scharfe Kante der Sicke frei, so daß eine Verletzungsgefahr für einen Monteur besteht, der unabsichtlich mit der Sicke in Berührung kommt. Ein weiterer wesentlicher Nachteil der bekannten Schlauchklemme besteht außerdem darin, daß beim Aufspreizen die Gefahr einer Überdehnung der Schlauchklemme besteht. Dies kann deshalb relativ leicht passieren, weil der Monteur beim Aufspreizen nicht sehen kann, wann der Aufspreizzustand erreicht ist, da die Verrastung zwischen der Sicke und dem radialen Abschnitt von dem Abdeckabschnitt verdeckt wird. Ein zu starkes Aufspreizen der Schlauchklemme kann eine funktionsbeeinträchtigende Schädigung infolge einer Überdehnung des Klemmkörpers zur Folge haben, was im Ergebnis zu Undichtigkeiten an der entsprechenden Schlauch-Stutzen-Verbindung führen kann.

Aus der DE - C - 38 32 875 ist eine Schlauchklemme bekannt, bei der der Klemmkörper in einem ersten Bereich einen gegenüber seinem äußeren vorderen Rand zurückversetzten Rastvorsprung aufweist, der zur Erzielung des Aufspreizzustandes mit dem anderen, zweiten Endbereich in Eingriff bringbar ist. Bei dieser Schlauchklemme ist ferner ein Überdehnungsschutz realisiert, bei dem ein als Anschlag dienender Arm vorgesehen ist, wodurch ein zu starkes Aufspreizen der Schlauchklemme verhindert wird.

Ausgehend von der bekannten Schlauchklemme ist es die Aufgabe der Erfindung, die Überdehnungsschutzeinrichtung hinsichtlich ihrer geometrischen Ausbildung zu verbessern.

Bei der eingangs beschriebenen Schlauchklemme ist erfindungsgemäß vorgesehen, daß im zweiten Endbereich eine langgestreckte Ausnehmung zur Aufnahme des entsprechend schmaleren ersten Endbereichs vorgesehen ist, das erste Spannende aus der Ausnehmung herausragt, der als Anschlag dienende Arm sich endseitig des zweiten Endbereichs ausgehend von einem Quersteg in die Ausnehmung hineinerstreckt und der Arm und das erste Spannende zum Überdehnungsschutz zusammenwirken, indem das vordere freie Ende des Arms nach Erreichen des Aufspreizzustandes bei weiterem Aufspreizen an den ersten Spannende anschlägt. Damit wird erfindungsgemäß eine geometrisch einfach und damit kostengünstig herstellbare Schlauchklemme bereitgestellt.

Von ganz besonderem Vorteil ist es, daß gleichzeitig neben der Möglichkeit einer optischen Kontrolle durch den Monteur, ob und wann der Aufspreizzustand beim Aufspreizen erreicht ist, eine mechanisch wirksame Überdehnungsschutzeinrichtung vorgesehen ist, die zwischen den Endbereichen wirksam ist. Diese mechanische Überdehnungsschutzeinrichtung verhindert ein Aufspreizen der Schlauchklemme wesentlich über den Aufspreizzustand hinaus. Außerdem lassen sich problemlos beide Endbereiche zum Ansetzen eines Spannwerkzeugs zum Aufspreizen nutzen.

Vorzugsweise ist die Schlauchklemme nur 1 bis 5 mm nach Erreichen des Aufspreizzustands weiter aufspreizbar. In jedem Falle ist es durch das Vorsehen einer solchen mechanischen Überdehnungsschutzeinrichtung ausgeschlossen, daß eine Überdehnung und damit eine Schädigung der Schlauchklemme auftritt.

Der als Anschlag dienende Arm erstreckt sich vom vorderen Ende des zweiten Endbereichs von einem dort vorgesehenen und den Endbereich abschließenden Quersteg in die dort vorgesehene Ausnehmung hinein. Der Quersteg bildet dabei einerseits ein als zweites Spannende bezeichnetes Spannende des zweiten Endbereichs zum Ansetzen eines Spannwerkzeuges, andererseits weist er den vorderen freien Rand auf und bildet den Rastanschlag für den Rastvorsprung. Beim Aufspreizen der Schlauchklemme mit Hilfe eines Spannwerkzeuges schlägt entweder der erste Endbereich oder aber das Spannwerkzeug am Arm an, wenn bzw. nachdem der Aufspreizzustand erreicht ist.

Ein weiterer Vorteil ist, daß der Arm am zweiten Endbereich und das erste Spannende am ersten Endbereich zum Überdehnungsschutz zusammenwirken. Hierbei schlägt das vordere freie Ende des Arms nach Erreichen des Aufspreizzustandes bei weiterem Aufspreizen an den ersten Spannende an.

Eingangs ist auf das Problem der Verletzungsgefahr bei der bekannten Schlauchklemme hingewiesen worden. Hierzu kann es immer dann kommen, wenn scharfe Kanten der Schlauchklemme im Klemmzustand frei liegen und ein Monteur unbeabsichtigterweise mit einer solchen scharfen Kante in Berührung kommt. Zur Vermeidung der Verletzungsgefahr ist nun weiterhin vorgesehen, daß der Arm im Klemmzustand den Rastvorsprung überdeckt. Dies bedeutet also, daß der Arm eine entsprechende Länge haben muß, die einerseits das Überdecken des Arms im Klemmzustand berücksichtigt, andererseits aber auch die erwähnten Belange des Überdehnungsschutzes.

Um die Entriegelung der erfindungsgemäßen Schlauchklemme so einfach wie möglich zu machen, weist der Arm eine nach außen gerichtete dachförmige Abkantung oder Aufwölbung auf. Durch diese Abkantung oder Aufwölbung des Armes wird im Aufspreizzustand der Schlauchklemme eine Eingriffsöffnung zwischen der Unterseite des Armes und der Oberseite des ersten Endbereichs gebildet, die beispielsweise zum Eingriff eines Schraubendrehers geeignet ist. Durch Einsetzen eines Schraubendrehers in die Eingriffsöffnung und Ausübung einer entsprechenden Hebelkraft läßt sich die Entrastung bzw. das Lösen der Schlauchklemme in besonders einfacher Weise durchführen.

In weiterer bevorzugter Ausgestaltung der vorliegenden Erfindung ist vorgesehen, daß sich im vorderen Bereich des zweiten Endbereichs eine Stufe befindet. Diese Stufe hat eine Höhe, die etwa der Materialdicke des ersten Endbereichs entspricht. Durch diese Maßnahme wird sichergestellt, daß beim Aufspreizen und beim Lösen der Schlauchklemme die Oberseite des ersten Endbereichs nicht an der Unterseite des zweiten Endbereichs, d. h. insbesondere am Quersteg, reibt, was nicht nur das Aufspreizen erschwert und ggf. das Lösen bzw. das Federn in den Klemmzustand behindert, sondern auch zu einer Beschädigung der in der Regel aufgetragenen Korrosionsschutzschicht führt, die dabei angekratzt oder aber abgekratzt werden kann. Außerdem kann die Schlauchklemme durch diese Maßnahme, insbesondere im Klemmzustand, einen kreisrunden Querschnitt und damit eine gleichmäßige Kraftverteilung haben.

Weiterhin ist vorgesehen, daß der Arm und der Rastvorsprung etwa auf einer Umfangslinie des Klemmkörper, und zwar mittig, liegen. Hierdurch wird sichergestellt, daß die Unterseite des Arms quasi als Führung für den Vorsprung beim Aufspreizen der Schlauchklemme dient, bis der Rastvorsprung am bzw. hinter dem vorderen freien Rand des zweiten Endbereichs, d. h. also hinter dem Quersteg, einrastet. Außerdem wird durch diese Maßnahme sichergestellt, daß der Rastvorsprung nicht unbeabsichtigter Weise am Rand der Ausnehmung beim Aufspreizen anschlägt, was zu Schwierigkeiten beim Aufspreizen führen könnte.

Es darf an dieser Stelle darauf hingewiesen werden, daß es zwar aufgrund der erwähnten Vorteile günstig ist, wenn der Rastvorsprung nach Erreichen des Aufspreizzustandes von außen erkennbar ist. Aufgrund des Anschlages zum Überdehnungsschutz, der in unmittelbarer Nähe zum Rastvorsprung angeordnet ist, ist dies allerdings nicht unbedingt erforderlich, da das Erreichen des Aufspreizzustandes spätestens beim Anschlagen am Anschlag für den Monteur erkennbar ist.

Herstellungstechnisch besonders einfach und damit kostengünstig ist es, wenn der Anschlag und der Rastvorsprung in einem Verfahrensschritt, d. h. bei einem einzigen Stanzvorgang hergestellt werden. Zu diesem Zweck können der Anschlag und der Rastvorsprung randseitig, und zwar vorzugsweise an einem gemeinsamen Rand am ersten Endbereich, vorgesehen sein. Insbesondere dann, wenn diese beiden Elemente in einem einzigen Stanzschritt hergestellt worden sind, sind sie als aufeinander zu gerichtete Schenkel ausgebildet, zwischen denen sich lediglich ein geringer Abstand zur Aufnahme des entsprechenden Anschlageelementes des zweiten Endbereichs zum Zusammenwirken bzw. Verrasten mit diesem befindet.

Damit die zuvor beschriebene Schlauchklemme in besonders einfacher Weise aufgespreizt werden kann, ist außerdem vorgesehen, daß der erste Endbereich endseitig ein sich etwa in radialer Richtung erstreckendes erstes Spannende und/oder der zweite Endbereich ein sich ebenfalls etwa in radialer Richtung erstreckendes zweites Spannende aufweist. In diesem Falle wirkt dann die eine, äußere Seite des zweiten Spannendes zum Verrasten mit dem Rastanschlag zusammen, während die gegenüberliegende andere, innere Seite des zweiten Spannendes mit dem Anschlag zum Überdehnungsschutz beim Aufspreizen zusammenwirkt. Das zweite Spannende weist hierzu einen Quersteg zum jeweiligen Anschlagen des Rastvorsprungs bzw. des Anschlags auf. Außerdem ist am Quersteg - benachbart dem Bereich des Anschlags bzw. des Rastvorsprungs - eine Ausnehmung zum Eingriff eines Werkzeugs, beispielsweise eines Schraubendrehers, vorgesehen, um hierdurch die Verrastung zu lösen und die Schlauchklemme in ihren Klemmzustand zu bringen.

Ein weiterer Vorteil des vom zweiten Spannende separaten bzw. unabhängigen Anschlags besteht grundsätzlich darin, daß sich aufgrund des Abstandes des Anschlags zum ersten Spannende eine Vergrößerung der Überdeckung der Endbereiche ergibt. Hierdurch kann die auf den Schlauch aufzubringende Kraft im Überdeckungsbereich der Endbereiche erhöht werden. Insbesondere kann durch entsprechende Ausbildung und Anordnung des Anschlags im ersten Spannende eine im wesentlichen kreisrunde Kraftverteilung auf den Schlauch über die Schlauchklemme realisiert werden. Bei Versuchen ist festgestellt worden, daß der Abstand vom Anschlag zum ersten Spannende zur Erzielung der zuvor genannten im wesentlichen kreisrunden Kraftverteilung auf den Schlauch etwa 4 bis 15 mm betragen sollte.

Weitere Merkmale, Vorteile und Anwendungsmöglichkeiten der vorliegenden Erfindung ergeben sich aus der nachfolgenden Beschreibung von Ausführungsbeispielen anhand der Zeichnung und der Zeichnung selbst. Es zeigt
- Fig. 1: eine Ansicht einer auf ein Schlauchende aufgeschobenen Schlauchklemme im Aufspreizzustand,
- Fig. 2: eine Ansicht der Schlauchklemme aus Fig. 1 im Klemmzustand,
- Fig. 3: eine Ansicht der Schlauchklemme aus Fig. 1 in Richtung des Pfeiles III in Fig. 1, ohne Schlauchende, und
- Fig. 4: eine Ansicht der Schlauchklemme aus Fig. 2 in Richtung des Pfeiles IV in Fig. 2, wiederum ohne Schlauchende.

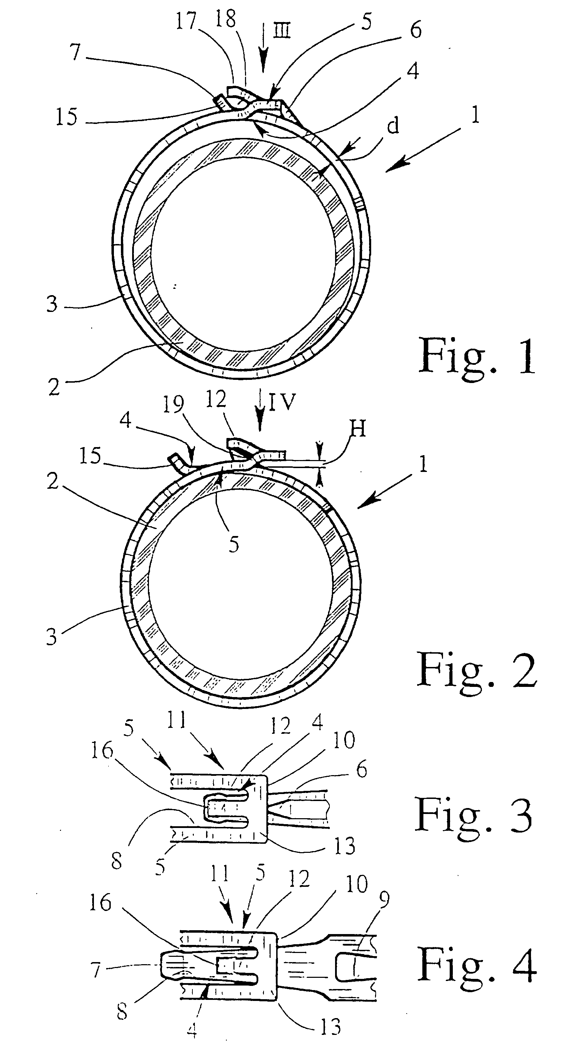

In den Fig. 1 bis 4 ist eine erste Ausführungsform einer Schlauchklemme 1 dargestellt, die auf ein Schlauchende 2 eines Schlauches aufgesetzt ist. Die Schlauchklemme 1 dient zur Realisierung einer Schlauch-Stutzen-Verbindung beispielsweise im Motorraum eines Kraftfahrzeuges. Die Schlauchklemme 1 weist einen im wesentlichen ringförmig ausgebildeten Klemmkörper 3 auf. Der Klemmkörper 3 besteht aus einem Federstahlband und weist Endbereiche 4, 5 auf, die einander überlappen. Im geklemmten, aufgesetzten Zustand, der im folgenden stets als Klemmzustand bezeichnet wird, hat die Schlauchklemme 1 bzw. der Klemmkörper 3 einen bestimmten vorgegebenen (Innen-) Durchmesser, der kleiner gleich dem Außendurchmesser des Schlauchendes 2 ist. Dies ist in Fig. 2 dargestellt.

Der Klemmkörper 3 ist entgegen der eigenen Federkraft mit Hilfe eines nicht näher dargestellten Spannwerkzeuges, bei dem es sich um eine Zange handeln kann, auf einen zweiten größeren Durchmesser aufspreizbar. Dieser Zustand, der im folgenden stets als Aufspreizzustand bezeichnet wird, ist in Fig. 1 dargestellt. Im ersten Endbereich 4 ist ein Rastvorsprung 6 vorgesehen. Der Rastvorsprung 6 ist gegenüber dem vorderen Rand 7 des ersten Endbereichs 4 zurückversetzt. Der Rastvorsprung 6 ist aus dem Material des Klemmkörpers 3 nach außen hin herausgedrückt. Zur Erzielung des Aufspreizzustandes bzw. um die Schlauchklemme 1 im Aufspreizzustand zu halten, ist der Rastvorsprung 6 mit dem anderen, zweiten Endbereich 5 in Eingriff bringbar.

Die beiden Endbereiche 4, 5 sind unterschiedlich ausgebildet. Der erste Endbereich 4 ist erheblich schmaler als der zweite Endbereich 5. Der zweite Endbereich 5 hingegen weist eine langgestreckte Ausnehmung 8 auf, in der der erste Endbereich 4 aufgenommen bzw. angeordnet ist. Neben der Ausnehmung 8 kann der Klemmenkörper 3 noch weitere Ausnehmungen 9 aufweisen, die zur Erzielung bestimmter Federeigenschaften des Klemmenkörpers 3 dienen.

Wesentlich ist nun, daß der Rastvorsprung 6 des ersten Endbereichs 4 im Aufspreizzustand, der in den Fig. 1 und 3 dargestellt ist, am vorderen freien Rand 10 des zweiten Endbereichs 5 anliegt. In diesem Zustand ist die zwischen dem ersten und zweiten Endbereich 4, 5 zustandegekommene Verrastung von außen für einen Monteur ohne weiteres optisch erkennbar (vgl. Fig. 3).

Neben der Möglichkeit, den eingenommenen Aufspreizzustand optisch zu erkennen, ist bei der Schlauchklemme 1 aber zusätzlich zwischen den Endbereichen 4, 5 eine mechanische Überdehnungsschutzeinrichtung 11 vorgesehen. Die mechanische Überdehnungsschutzeinrichtung 11 verhindert ein Aufspreizen der Schlauchklemme 1 wesentlich über den Aufspreizzustand hinaus. Vorliegend wird die Überdehnungsschutzeinrichtung 11 bereits wirksam, wenn die Schlauchklemme 1 wenige Millimeter über dem Aufspreizzustand hinaus aufgespreizt wird. Zur Überdehnungsschutzeinrichtung 11 gehört ein Arm 12, der sich vom vorderen Ende des zweiten Endbereichs 5, das von einem Quersteg 13 gebildet wird, in die Ausnehmung 8 hinein erstreckt. Der Quersteg 13 oder genauer der vordere freie Rand 10 des Querstegs 13 bildet das (zweite) Spannende des zweiten Endbereichs 5. Der Arm 12 dient als Anschlag entweder für das Spannwerkzeug oder aber für den ersten Endbereich 4 beim Aufspreizen.

Endseitig am ersten Endbereich 4 befindet sich ein nach außen gerichtetes und aus der Ausnehmung 8 ragendes (erstes) Spannende 15. Im dargestellten Ausführungsbeispiel dient das erste Spannende 15 nicht nur zum Ansetzen des Spannwerkzeugs, es stellt auch einen Teil der Überdehnungsschutzeinrichtung 11 dar, da der Arm 12 und das Spannende 15 derart zusammenwirken, daß das vordere freie Ende 16 des Arms 12 nach Erreichen des Aufspreizzustandes bei weiterem Aufspreizen an dem Spannende 15 anschlägt.

Wie sich insbesondere aus Fig. 4 ergibt, überdeckt der Arm 12 im Klemmzustand den Rastvorsprung 6. Weiterhin weist der Arm 12 eine nach außen gerichtete dachförmige Abkantung 17 auf. Zwischen der Abkantung 17 und der Oberseite des ersten Endbereichs 4 befindet sich eine Eingriffsöffnung 18. Diese Eingriffsöffnung 18 dient zum Ansetzen eines Werkzeugs, beispielsweise eines Schraubendrehers, um die Schlauchklemme 1 zu entrasten.

Wie sich insbesondere aus den Fig. 1 und 2 ergibt, ist im zweiten Endbereich 5 weiterhin eine Stufe 19 vorgesehen. Die Höhe H der Stufe 19 entspricht etwa der Materialdicke d des ersten Endbereichs 4 bzw. des Klemmenkörpers 3. Schließlich ist vorgesehen, was sich wiederum aus den Fig. 3 und 4 ergibt, daß der Arm 12 und der Rastvorsprung 6 etwa auf einer gemeinsamen Umfangslinie des Klemmenkörpers 3 liegen, und zwar etwa mittig.

Einer druckdichte Schlauch-Stutzen-Verbindung wird bei der in den Fig. 1 bis 4 dargestellten Ausführungsform nun wie folgt realisiert:

Die Schlauchklemme 1 kann sich zunächst im - nicht dargestellten - entspannten Zustand befinden oder aber vom Klemmenhersteller bereits in den Aufspreizzustand gebracht und so an den Autohersteller geliefert worden sein. Jedenfalls wird die Schlauchklemme 1 im Aufspreizzustand auf das Schlauchende 2 aufgesetzt. Dieser Zustand ist in den Fig. 1 und 3 dargestellt. Sodann wird das Schlauchende 2 über den entsprechenden Stutzen gebracht. Anschließend wird die Schlauchklemme 1 an die Einbaustelle geschoben. Die Entrastung kann grundsätzlich in beliebiger Art und Weise erfolgen. Hierzu kann einmal der erste Endbereich 4 nach unten und/oder der zweite Endbereich 5 nach oben bewegt werden. Zweckmäßigerweise wird in die Eingriffsöfmung 18 ein Schraubendreher eingebracht. Durch entsprechende Hebelkraft werden der erste und der zweite Endbereich 4, 5 auseinander bewegt, wobei sich die Eingriffsöffnung 18 vergrößert. Sobald der Rastvorsprung 6 außer Eingriff mit dem vorderen Rand 10 des zweiten Endbereichs 5 kommt, federt die Schlauchklemme 1 in den in den Fig. 2 und 4 dargestellten Klemmzustand.

Ein erneutes Aufspreizen, beispielsweise infolge eines unbeabsichtigten Entrastens oder aber zum Lösen der Schlauch-Stutzen-Verbindung, kann ohne weiteres auch ohne Spezialwerkzeuge erfolgen, zum Beispiel mit Hilfe einer einfachen Zange, die lediglich am ersten Spannende 15 und am Rand 10 gesetzt werden muß. In jedem Falle wird aber beim Aufspreizen - nach Erreichen des Aufspreizzustandes - die Überdehnungsschutzeinrichtung 11 wirksam, wobei der Arm 12 mit seinem vorderen freien Ende 16 an dem Spannende 15 anschlägt.

## Patentansprüche

1. Schlauchklemme (1) mit einem ein Schlauchende (2) im wesentlichen ringförmig umfassenden Klemmkörper (3) mit einander überlappenden Endbereichen (4, 5), wobei im geklemmten Zustand ein bestimmter erster Durchmesser vorliegt - Klemmzustand - und der Klemmkörper (3) entgegen der eigenen Federkraft mit Hilfe eines Spannwerkzeuges auf einen zweiten größeren Durchmesser aufspreizbar ist ― Aufspreizzustand -, im ersten Endbereich (4) ein gegenüber seinem äußeren vorderen Rand (7) zurückversetzter Rastvorsprung (6) vorgesehen ist, der zur Erzielung des Aufspreizzustandes mit dem anderen, zweiten Endbereich (5) in Eingriff bringbar ist, endseitig am ersten Endbereich (4) ein nach außen gerichtetes erstes Spannende (15) vorgesehen ist, der Rastvorsprung (6) des ersten Endbereichs (4) im Aufspreizzustand am vorderen freien oder äußeren Rand (10) des zweiten Endbereichs (5) anliegt und zwischen den Endbereichen (4, 5) eine mechanische Überdehnungsschutzeinrichtung (11) wirksam ist, die ein Aufspreizen der Schlauchklemme (1) wesentlich über den Aufspreizzustand hinaus verhindert, wobei die Überdehnungsschutzeinrichtung (11) einen als Anschlag dienenden Arm (12) aufweist, **dadurch gekennzeichnet, daß** im zweiten Endbereich (5) eine langgestreckte Ausnehmung (8) zur Aufnahme des entsprechend schmaleren ersten Endbereichs (4) vorgesehen ist, das erste Spannende (15) aus der Ausnehmung (8) heraus ragt, der als Anschlag dienende Arm (12) sich endseitig des zweiten Endbereichs (5) ausgehend von einem Quersteg (13) in die Ausnehmung (8) hinein erstreckt und der Arm (12) und das erste Spannende (15) zum Überdehnungsschutz zusammenwirken, indem das vordere freie Ende (16) des Arms (12) nach Erreichen des Aufspreizzustandes bei weiterem Aufspreizen an den ersten Spannende (15) anschlägt.

2. Schlauchklemme nach Anspruch 1, **dadurch gekennzeichnet, daß** der Quersteg (13) das zweite Spannende bildet.

3. Schlauchklemme nach Anspruch 1 oder 2, **dadurch gekennzeichnet, daß** der Arm (12) im Klemmzustand den Rastvorsprung (6) überdeckt.

4. Schlauchklemme nach einem der Ansprüche 1 bis 3, **dadurch gekennzeichnet, daß** der Arm (12) eine nach außen gerichtete dachförmige Abkantung (17) oder Aufwölbung aufweist.

5. Schlauchklemme nach einem der Ansprüche 1 bis 4, **dadurch gekennzeichnet, daß** der Arm (12) und der Rastvorsprung (6) etwa auf einer Umfangslinie liegen, vorzugsweise mittig.

6. Schlauchklemme nach einem der Ansprüche 1 bis 5, **dadurch gekennzeichnet, daß** im vorderen Bereich des zweiten Endbereiches (5) eine Stufe (19) vorgesehen ist.

7. Schlauchklemme nach Anspruch 6, **dadurch gekennzeichnet, daß** die Höhe (H) der Stufe (19) etwa der Materialdicke (d) des ersten Spannendes (4) entspricht.

## Claims

1. Hose clamp (1) with an essentially ring-shaped clamp body (3) which encloses one end of a hose (2), with overlapping end areas (4, 5) of the clamp body (3), wherein there is a specific first diameter in the clamped state - clamped state -, and with the help of a clamping tool the clamp body (3) can be spread to a larger diameter against its own spring force - spread state - , a catch projection (6) is provided in the first end area (4) rearwardly offset relative to its front outer edge (7) and which can be engaged with a second end area (5) to achieve the spread state, a clamp end (15) is provided on the end of the first end area (4) facing outwardly, the catch projection (6) of the first end area abuts the free front or outer edge (10) of the second end area (5) in the spread state and a mechanical overstretch protection device (11) is operative between the end areas (4, 5) that prevents spreading of the hose clamp (1) essentially beyond the spread state, wherein the overstretch protection device (11) has an arm (12) serving as a stop **characterized in that** the second end area (5) has a longitudinally extended recess (8) to hold the first end area (4) which is correspondingly narrower, the first clamp end (15) jutting out of the recess (8), the arm (12) serving as a stop stretching from a transverse crosspiece (13) into the recess (8) coming from the end of the second end area (5) and the arm (12) and the first clamp end (15) working together as overstretch protection in which the front free end (16) of the arm (12) strikes the first clamp end (15) after reaching the spread state during further spreading.

2. Hose clamp according to claim 1, **characterized in that** the transverse crosspiece (13) forms the second clamp end.

3. Hose clamp according to claim 1 or 2, **characterized in that** the arm (12) covers the catch projection (6) in the clamped state.

4. Hose clamp according to any one of claims 1 to 3, **characterized in that** the arm (12) has a roof-like bevel (17) or bulge directed outwardly.

5. Hose clamp according to any one of claims 1 to 4, **characterized in that** the arm (12) and the catch projection (6) are roughly on a peripheral line, preferably central.

6. Hose clamp according to any one of claims 1 to 5, **characterized in that** a step (19) is provided in the front area of the second end area (5).

7. Hose clamp according to claim 6, **characterized in that** the height (H) of the step (19) has roughly the same material thickness (d) as the first clamp end (4).

## Revendications

1. Pince pour tuyaux souples (1) comprenant un corps de pincement (3) entourant de manière essentiellement circulaire une extrémité de tuyau souple (2), comprenant des zones terminales (4, 5) se chevauchant l'une l'autre, dans laquelle, à l'état pincé, on obtient un premier diamètre déterminé -état de pincement- et le corps de pincement (3) peut être écarté pour atteindre un second diamètre supérieur à l'aide d'un outil de serrage à l'encontre de la force élastique propre -état d'écartement-, une saillie d'encliquetage (6) est prévue dans la première zone terminale (4), en position rétractée par rapport à son bord extérieur avant (7), laquelle saillie peut être amenée en engrènement, pour atteindre l'état d'écartement, avec la seconde autre zone terminale (5), une première extrémité de serrage (15) orientée vers l'extérieur est prévue du côté terminal sur la première extrémité terminale (4), la saillie d'encliquetage (6) de la première zone terminale (4) est en contact, à l'état d'écartement, avec le bord libre ou extérieur avant (10) de la deuxième zone terminale (5) et un dispositif mécanique de protection contre l'allongement excessif (11) est actif entre les zones terminales (4, 5), ce dispositif empêchant un écartement de la pince pour tuyaux souples (1) substantiellement au delà de l'état d'écartement, le dispositif de protection contre l'allongement excessif (11) présentant un bras servant de butée (12),
**caractérisé en ce que**,
dans la deuxième zone terminale (5), il est prévu un évidement (8) étiré en longueur pour que vienne s'y loger la première zone terminale (4) respectivement plus étroite, que la première extrémité de serrage (15) dépasse de l'évidement (8), que le bras servant de butée (12) s'étend du côté terminal de la deuxième zone terminale (5) à partir d'une nervure transversale (13) à l'intérieur de l'évidement (8) et que le bras (12) et la première extrémité de serrage (15) coopèrent pour la protection contre l'allongement excessif, du fait que l'extrémité libre avant (16) du bras (12) vient buter sur la première extrémité de serrage (15), une fois l'état d'écartement atteint, lors de la poursuite de l'écartement.

2. Pince pour tuyaux souples selon la revendication 1, **caractérisée en ce que** la nervure transversale (13) constitue la deuxième extrémité de serrage.

3. Pince pour tuyaux souples selon la revendication 1 ou 2, **caractérisée en ce que** le bras (12) recouvre la saillie d'encliquetage (6) à l'état de pincement.

4. Pince pour tuyaux souples selon l'une quelconque des revendications 1 à 3, **caractérisée en ce que** le bras (12) présente un chanfrein ou un bombement (17) en forme de toit dirigé vers l'extérieur.

5. Pince pour tuyaux souples selon l'une quelconque des revendications 1 à 4, **caractérisée en ce que** le bras (12) et la saillie d'encliquetage (6) reposent à peu près sur une ligne circonférentielle, de préférence médiane.

6. Pince pour tuyaux souples selon l'une quelconque des revendications 1 à 5, **caractérisée en ce qu'**il est prévu dans la zone avant de la deuxième zone terminale (5) un gradin (19).

7. Pince pour tuyaux souples selon la revendication 6, **caractérisée en ce que** la hauteur (H) du gradin (19) correspond approximativement à l'épaisseur du matériau (d) de la première extrémité de serrage (4).
